# EUROPEAN PATENT APPLICATION

(11) **EP 1 827 017 A2**
(43) Date of publication of application: **29.08.2007**
(21) Application number: 07102662.9
(22) Date of filing: 19.02.2007
(51) Int. Cl.: H04N 5/77

(54) **Method and apparatus for recording and reproducing multimedia data**

(30) Priority: 16.06.2006 KR 20060054530; 22.02.2006 US 775319 P
(71) Applicant: Samsung Electronics Co., Ltd., Suwon-si, Gyeonggi-Do (KR)
(72) Inventor: Song, Sun-woo, Seoul (KR); Jang, Yon-hee, Gyeonggi-do (KR)
(74) Representative: Zimmer, Franz-Josef

(57) **Abstract**

An apparatus and method for recording and reproducing multimedia data in a semiconductor recording device and an optical recording device is described. The apparatus for recording and reproducing multimedia data includes a semiconductor recording device and an optical recording device, includes a recording device selection means for selecting the semiconductor recording device or the optical recording device. A photographing/reproduction selection means selects a photographing mode in which an image is photographed or a player mode in which a recorded image is reproduced. And a display displays the photographed image, the image being reproduced, or menu information, wherein when the recording device selection means selects the semiconductor recording device, a still image is photographed or reproduced in the photographing mode or the player mode, and when the recording device selection means selects the optical recording device, a video image is photographed or reproduced in the photographing mode or the player mode.

## Description

The present invention relates to an apparatus and method for recording and/or reproducing multimedia data.

An apparatus for effectively recording and reproducing multimedia data using a semiconductor recording device and an optical recording device is required.

It is the object of the present invention to provide an apparatus and method for recording and/or reproducing multimedia data in a semiconductor recording device and an optical recording device.

This object is solved by the subject matter of the independent claims.

Preferred embodiments are defined in the dependent claims.

According to an aspect of exemplary embodiments of the present invention, an apparatus for recording and reproducing multimedia data in a semiconductor recording device and an optical recording device is provided. The apparatus comprises a recording device selection means for selecting the semiconductor recording device or the optical recording device, a photographing/reproduction selection means for selecting a photographing mode in which an image is photographed or a player mode in which a recorded image is reproduced, and a display for displaying the photographed image, the image being reproduced, or menu information. When the recording device selection means selects the semiconductor recording device, a still image is photographed or reproduced in the photographing mode or the player mode. When the recording device selection means selects the optical recoding device, video is recorded or reproduced in the photographing mode or the player mode.

According to another aspect of exemplary embodiments of the present invention, an on screen display (OSD) menu display method of an apparatus is provided for recording and reproducing multimedia data in a semiconductor recording device and an optical recording device. The method comprises displaying a disc type information icon indicating disc type information of the optical recording device, and displaying a disc format information icon indicating disc format information of the optical recording device.

According to another aspect of exemplary embodiments of the present invention, an image information storing method of an apparatus is provided for recording and reproducing multimedia data in a semiconductor recording device and an optical recording device. The method comprises receiving a selection signal selecting a still image mode in which a still image is recorded or a video mode in which video is recorded. When the still image mode is selected using the received selection signal, storing the still image information in the semiconductor recording device. When the video mode is selected using the received selection signal, storing the video information in the optical recording device.

According to another aspect of exemplary embodiments of the present invention, an image information reproducing method of an apparatus is provided for recording and reproducing multimedia data in a semiconductor recording device and an optical recording device. The method comprises determining whether a mode is a still image mode in which a still image is reproduced or a video mode in which video is reproduced, if the mode is determined to be the still image mode, accessing image information recorded in the semiconductor recording device and displaying the image information, if the mode is determined to be the video mode, accessing image information recorded in the optical recording device and displaying the image information.

According to another aspect of exemplary embodiments of the present invention, a video information storing method of an apparatus is provided for recording and reproducing multimedia data in a semiconductor recording device and an optical recording device. The method comprises determining if a mode is a memory photographing mode in which the multimedia data is recorded in the semiconductor recording device, if the mode is determined to be the memory photographing mode, MPEG-encoding video, and storing the MPEG-encoded video in the semiconductor recording device.

According to another aspect of exemplary embodiments of the present invention, an apparatus for recording and reproducing multimedia data in a semiconductor recording device and an optical recording device is provided. The apparatus comprises a data processor for converting image information into a digital signal, processing the digitized image information into data that is to be recorded in the semiconductor recording device, and controlling the processed data to be output to an external device, an encoder for encoding the digitized image information input from the data processor and externally input video as data that is to be recorded in the optical recording device, a decoder for decoding the data recorded in the optical recording device, an output unit for outputting the image information decoded by the decoder or the data processed by the data processor, and a controller for controlling the operation of the data processor, the encoder, the decoder, and the output unit.

The present invention will become more apparent from the following description taken in conjunction with the accompanying drawings, in which:
FIGs. 1A through 1D are diagrams illustrating an apparatus for recording and/or reproducing multimedia data according to an exemplary embodiment of the present invention;
FIG. 2 is a front top view illustrating a remote controller for remotely controlling the apparatus for recording and/or reproducing multimedia data according to an exemplary embodiment of the present invention;
FIGs. 3A through 3D are screen-shots illustrating an on screen display (OSD) of the apparatus for recording and/or reproducing multimedia data according to an exemplary embodiment of the present invention;
FIG. 4 is a screen-shot illustrating a user interface screen for formatting a disc before a recording operation of the apparatus for recording and/or reproducing multimedia data according to an exemplary embodiment of the present invention;
FIG. 5 is a screen-shot illustrating a menu used to record multimedia data in the apparatus for recording and/or reproducing multimedia data according to an exemplary embodiment of the present invention;
FIGs. 6A through 6C are screen-shots_illustrating a user interface screen with respect to a title list of the apparatus for recording and/or reproducing multimedia data according to an exemplary embodiment of the present invention;
FIGs. 7A and 7B are screen-shots illustrating a user interface screen with respect to a play list of the apparatus for recording and/or reproducing multimedia data according to an exemplary embodiment of the present invention;
FIG. 8 is a screen-shot illustrating a user interface screen with respect to a disc manager of the apparatus for recording and/or reproducing multimedia data according to an exemplary embodiment of the present invention;
FIGs. 9A through 9C are screen-shots illustrating a user interface screen provided to photograph and reproduce a still image in the apparatus for recording and/or reproducing multimedia data according to an exemplary embodiment of the present invention;
FIG. 10 is a block diagram illustrating an apparatus for recording/reproducing multimedia data including a semiconductor recording device and an optical recording device according to an exemplary embodiment of the present invention;
FIG. 11 is a flowchart illustrating an OSD menu displaying method of a multimedia data recording and/or reproducing device in a semiconductor recording device and an optical recording device according to an exemplary embodiment of the present invention;
FIG. 12 is a flowchart illustrating an image information storing method of a multimedia data recording and/or reproducing device in a semiconductor recording device and an optical recording device according to an exemplary embodiment of the preset invention;
FIG. 13 is a flowchart illustrating an image information reproducing method of a multimedia data recording and/or reproducing device in a semiconductor recording device and an optical recording device according to an exemplary embodiment of the present invention; and
FIG. 14 is a flowchart illustrating a video information storing method of a multimedia data recording and/or reproducing device in a semiconductor recording device and an optical recording device according to an exemplary embodiment of the preset invention.

The matters defined in the description such as a detailed construction and elements will now be described to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

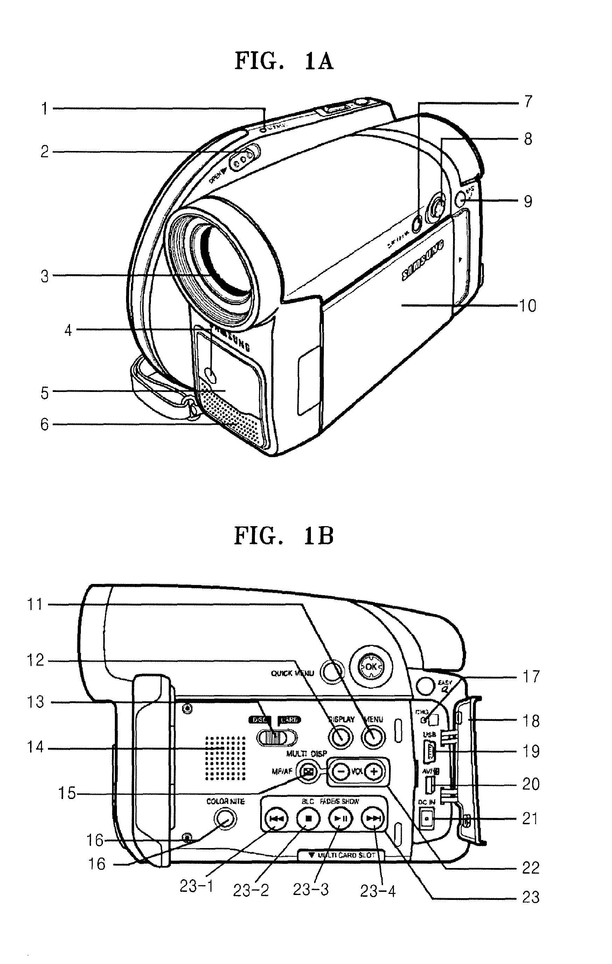

FIGs. 1A through 1D are diagrams illustrating an apparatus for recording and/or reproducing multimedia data according to an exemplary embodiment of the present invention. According to an exemplary embodiment of the present invention, the apparatus for recording and/or reproducing multimedia data is a camcorder.

Referring to FIG. 1A, the apparatus for recording and/or reproducing multimedia data comprises an access display 1, an open switch 2, a lens 3, an LED light 4, a remote sensor 5, an inside mike 6, a quick menu button 7, a joystick 8, an easy Q button 9 and a TFT LCD screen 10 in front & left views.

The access display 1 indicates that a disc is accessed when the disc is loaded in a disc driver included in the apparatus for recording and/or reproducing multimedia data. The open switch 2 is used to open a part for inserting a disc. The LED light 4 is used to photograph a subject in a dark place. The remote sensor 5 detects a signal from a remote controller of the apparatus for recording and/or reproducing multimedia data.

The quick menu button 7 is used to provide a frequently used button. The joystick 8 is used to move or select a menu. The easy Q button 9 is used to set a specific mode , e.g. digital image stabilization (DIS), auto focus (AF), an auto white balance (AWB), and an auto exposure (AE), so that a beginner can easily photograph an image.

Referring to FIG. 1 B, the apparatus for recording and/or reproducing multimedia data comprises a menu button 11, a display button 12, a disc/card mode switch 13, a built-in speaker 14, a manual focusing (MF)/auto focusing (AF)/Multi DISP button 15, a C.NITE/LED light/color NITE 16, a charge indicator 17, a jack cover 18, a USB jack 19, an AV jack 20, a DC IN jack 21, a volume button 22, and function buttons 23-1, 23-2, 23-3 and 23-4 in a left side view.

A menu is display if the menu button 11 is pressed. An on screen display (OSD) is displayed if the display button 12 is pressed. The mode switch 13 is used to change a mode in which the disc is used as the recording medium and a mode in which a memory card is used.

The MF/AF/Multi DISP button 15 is used to manually adjust focus, automatically adjust focus, or indicate an image as a thumbnail index. AF/MF can be adjusted in a camera mode or a memory card mode. If the MF button 15 is pressed in order to adjust MF, an MF icon is displayed on a display window. At this time, the volume button 22 is used to adjust the focus. The C.NITE/LED light/color NITE 16 is used to adjust a shutter speed so as to photograph a brighter subject in a dark place or by using an LED.

The function button 23-1 is used to adjust backward search/skip in a player mode, backward skip in a still image mode of a memory player mode and backward search in a video mode of a memory player mode. The function button 23-4 is used to adjust forward search/ skip in the player mode, forward skip in the still image mode and forward search in the video mode of the memory player mode.

The stop button 23-2 is used to stop reproducing in the player mode and the memory player mode and to operate a back light compensation (BLC) mode of a camera mode (or a photograph mode). The play/pause button 23-4 is used to play/pause reproducing in the player mode, perform a fade function in the camera mode, perform a slide show in the still image mode of the memory player mode and play/pause reproducing in the video mode of the memory player mode. A fade function makes an image gradually appear or disappear.

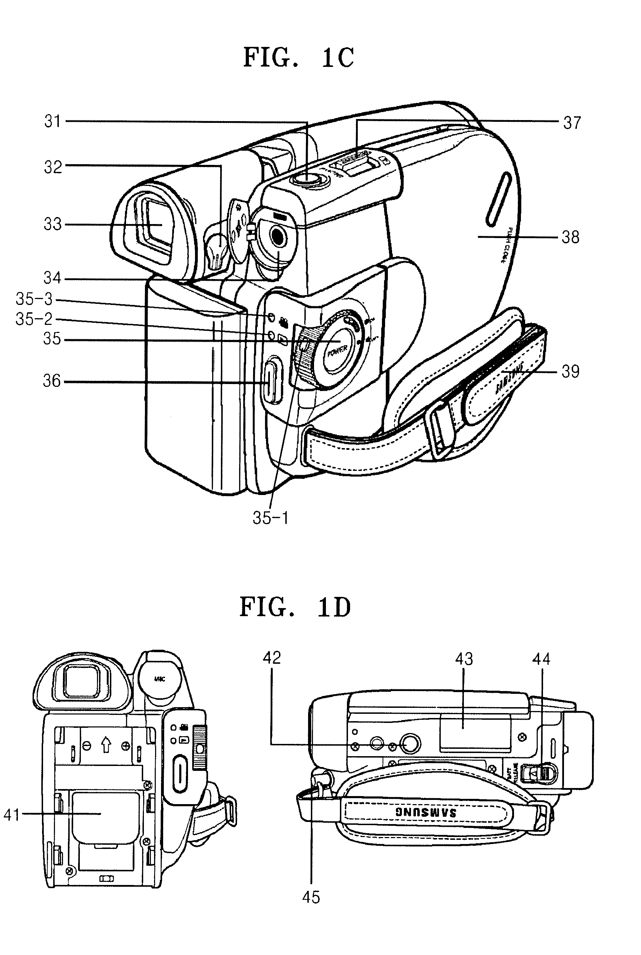

Referring to FIG. 1C, the apparatus for recording and/or reproducing multimedia data comprises a photo button 31, a focus adjustment knob 32, a viewfinder 33, an outside mike MIC jack 34, a power switch 35, a start/stop button 36, a zoom lever 37, a disc cover 38 and a hand strap 39 in right and top views. The photo button 31 is used to photograph a still image. The photographed image is stored in a memory card. The focus zoom knob 32 is used to adjust focus of a photo through the viewfinder 33.

The apparatus for recording and/or reproducing multimedia data is operated in the camera mode in which the multimedia data is recorded and in the player mode in which the multimedia data is reproduced. If an indicator 35 of the power switch 35 is located in a camera mode indicator 35-2, the apparatus for recording and/or reproducing multimedia data is operated in the camera mode and if the indicator 35-1 is located in a player mode indicator 35-3, the apparatus for recording and/or reproducing multimedia data is operated in the player mode.

With reference to the mode switch 13 illustrated in FIG. 1 B, if the indicator 35-1 is located in the camera mode indicator 35-2 and the mode switch 13 is switched to a disc mode, the apparatus for recording and/or reproducing multimedia data is operated in the camera mode in which the multimedia data is recorded in the disc. If the indicator 35-1 is located in the player mode indicator 35-3 and the mode switch 13 is switched to the disc mode, the apparatus for recording and/or reproducing multimedia data is operated in the player mode in which the multimedia data recorded in the disc is reproduced.

If the indicator 35-1 is located in the camera mode indicator 35-2 and the mode switch 13 is switched to a memory camera mode, the apparatus for recording and/or reproducing multimedia data is operated in the memory card mode in which the multimedia data is recorded in a memory card. If the indicator 35-1 is located in the player mode indicator 35-3 and the mode switch 13 is switched to the memory camera mode, the apparatus for recording and/or reproducing multimedia data is operated in the memory player mode in which the multimedia data recorded in the memory card is reproduced.

Referring to FIG. 1D, the apparatus for recording and/or reproducing multimedia data comprises a lithium battery cover 41, a triangle stand upholder 42, a memory card slot 43, a battery release switch 44 and a hand strap hook 45. Memory cards such as secure digital (SD) cards, multimediacards (MMCs), memory stick/memory stick PRO, etc. can be inserted into the memory card slot 43 in a rear and bottom views.

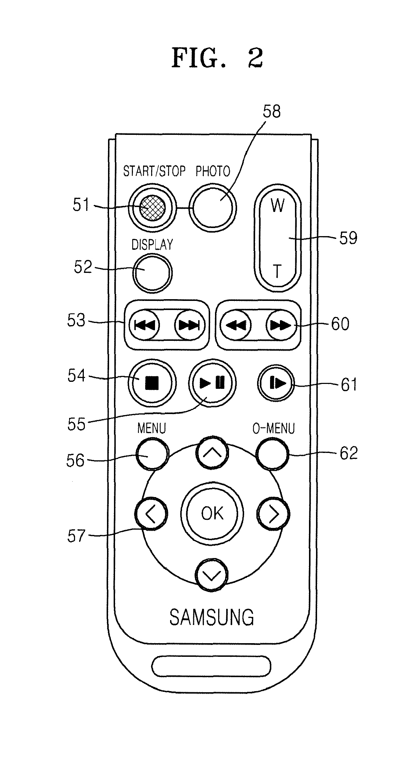

FIG. 2 is a front top view illustrating a remote controller for remotely controlling the apparatus for recording and/or reproducing multimedia data according to an exemplary embodiment of the present invention. Referring to FIG. 2, the remote controller comprises a start/stop button 51, a display button 52, a skip button 53, a stop button 54, a play/stop button 55, a menu button 56, an up/down/left/right/OK button 57, a photo button 58, a wide angle/telephoto (W/T) zoom button 59, a search button 60, a slow button 61 and a quick menu Q-MENU button 62.

The Q-MENU button 62 provides quick menus including DIS, programmed automatic exposure (AE), white balance, digital effect, shutter and exposure in a camera mode. With reference to a title list in a player mode, the Q-MENU button 62 provides quick menus including delete, partial delete, delete protect, title name and title information. With reference to a play list, the Q-MENU button 62 provides quick menus including a new play list, delete, play list edit and play list information. The Q-MENU button 62 provides white balance and photo quality and exposure in a memory card mode. The Q-MENU button 62 provides quick menus including delete, full delete (in case of a thumbnail index), delete protect and print mark and format.

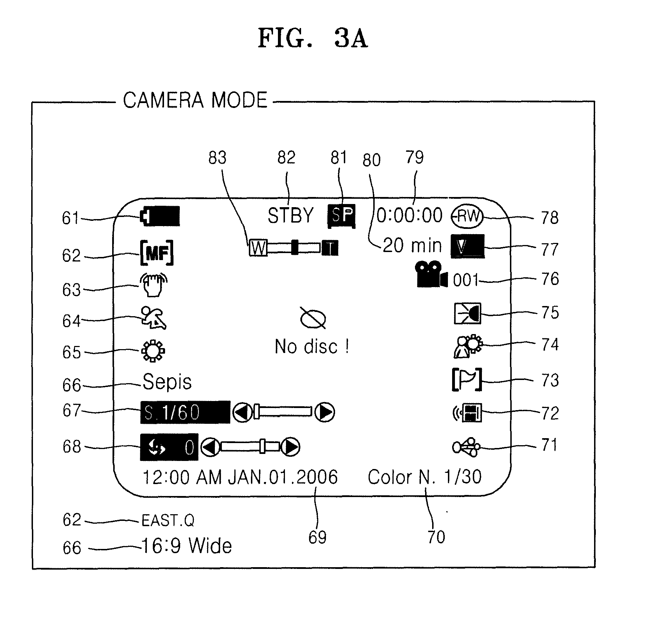

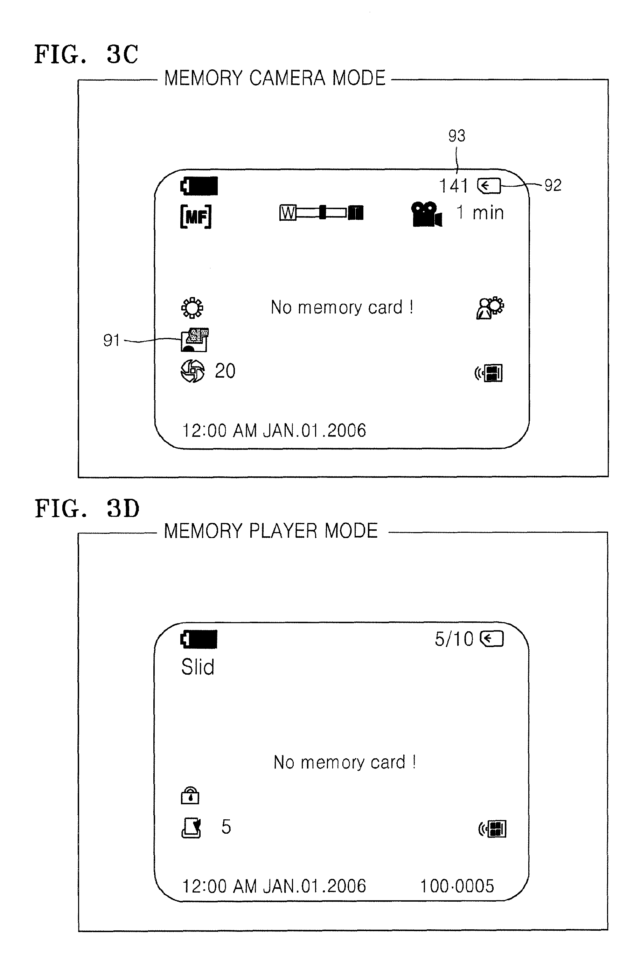

FIGs. 3A through 3D are screenshots of an OSD of the apparatus for recording and/or reproducing multimedia data according to an exemplary embodiment of the present invention. Referring to FIG. 3A, the OSD comprises a battery level 61, MF 62, DIS 63, a programmed AE mode 64, a white balance mode 65, a digital effect mode 66, a shutter speed 67, exposure 68, date/time 69, color NITE 70, USB 71, remote 72, wind cut 73, BLC 74, LED light 75, title list number 76, disc format 77, disc type 78, counter 79, remaining time 80, a recording mode 81, a motion mode 82 and zoom position 83 in a camera mode.

The programmed AE 64 is operated in the camera mode and adjusts the opening of the shutter speed 67 in accordance with a recording status. The remote 72 is set to be displayed so that the remote controller illustrated in FIG. 2 can control the apparatus for recording and/or reproducing multimedia data. When the wind cut 73 is turned on, the sound of the wind or other noises can be minimized in the camera mode.

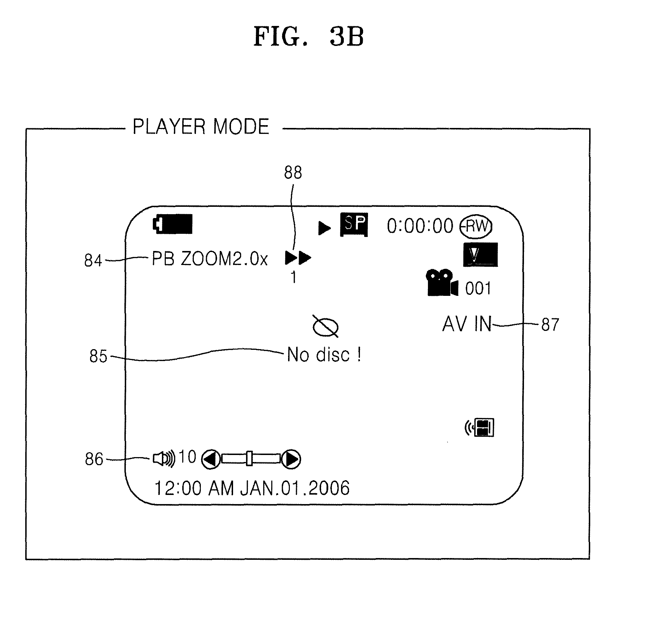

Referring to FIG. 3B, the OSD comprises playback (PB) zoom 84, message line 85, volume control 86, AV IN 87 and a play speed 88 in a player mode.

Referring to FIG. 3C, the OSD comprises photo quality 91, card (memory card) indicator 92 and an image counter (the total number of recordable photos) 93 in a memory card mode.

Referring to FIG. 3D, the OSD comprises slide show 94, delete protect indicator 95, print mark 96, folder number-file number 97 and image counter (current image/total number of recorded images) 98 in a memory player mode.

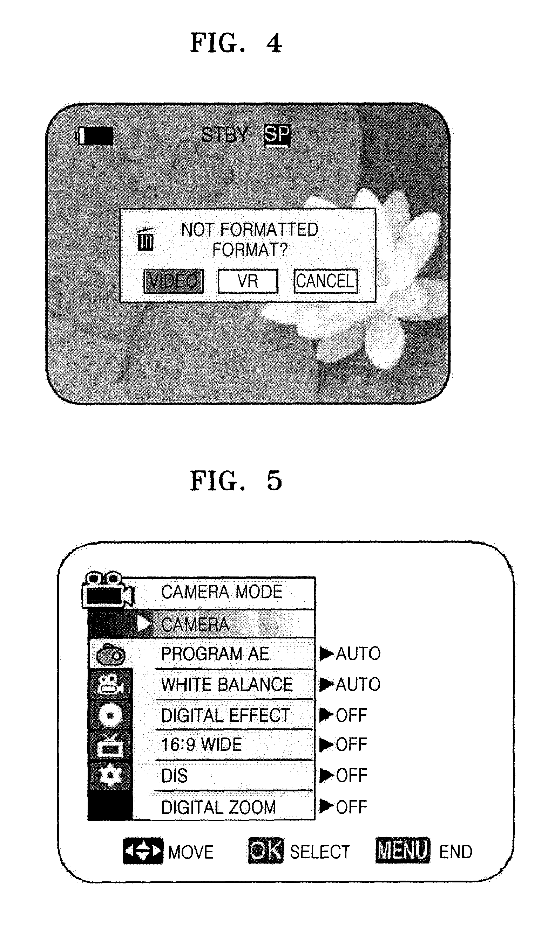

FIG. 4 is a screen-shot illustrating a user interface screen for formatting a disc before a recording operation of the apparatus for recording and/or reproducing multimedia data according to an exemplary embodiment of the present invention. Referring to FIG. 4, when the disc is inserted into the apparatus for recording and/or reproducing multimedia data, the disc needs to be formatted. The apparatus for recording and/or reproducing multimedia data according to an exemplary embodiment of the present invention identifies the type of disc inserted and performs formatting of the disc according to the type of the disc.

If the type of the disc is a DVD-R/+R DL disc, the disc is automatically formatted.

If the type of the disc is a DVD-RW disc, the apparatus for recording and/or reproducing multimedia data provides the user interface screen that includes a message <the disc is not formatted. Do you want to format the disc?> and sets a format mode of the disc. A user can select a video mode or a video recording (VR) mode. If the disc is formatted to the video mode, when the disc is finalized, the disc can be reproduced in most DVD recording/reproducing apparatuses. If the disc is formatted to the VR mode, although the disc can be edited in a DVD camcorder, the disc can only be reproduced in a DVD recording/reproducing apparatus. The joystick 8 is used to select the video mode or the VR mode. If the disc is completely formatted, a message <completed!> is displayed on the user interface screen. If the user selects <cancel>, an alert message <the disc is not formatted> is displayed on the user interface screen. If a new disc needs to be formatted, the user uses a <disc manager> menu, which will be described later, to format the disc in the future.

If the disc is a DVD+RW disc, a message <do you want to format the disc? If so, all files will be deleted> is displayed on the user interface screen. If the joystick 8 is used to select <yes> to completely format the disc, a <complete> message is displayed on the user interface screen. If the joystick 8 is used to select <no>, an alert message <the disc is not formatted> is displayed on the user interface screen. If a new disc needs to be formatted, the user uses the <disc manager> menu, which will be described later, to format the disc in the future.

FIG. 5 is a screen-shot illustrating a menu used to record multimedia data in the apparatus for recording and/or reproducing multimedia data according to an exemplary embodiment of the present invention. Referring to FIG. 5, if the mode switch 13 is switched to disc mode, the power switch 35 is switched to camera and the menu button 56 is pressed, the menu appears. The joystick 8 is used to select the camera and then programmed AE, white balance, digital effect, 16:9 wide, DIS and digital zoom by moving the joystick 8 up and down.

If the joystick 8 is used to select the programmed AE in order to provide auto mode in which the multimedia data is usually recorded, sports mode in which a quickly moving person or subject is recorded, portrait mode in which a background of a subject or portrait is recorded, spotlight mode in which a brightly lit part can be precisely recorded, sand/snow mode in which a person or a subject is dark due to light reflected from sand and snow, and high (shutter) speed mode in which a quickly moving subject, such as someone playing golf or tennis, is recorded can be selected. The selected modes are indicated as icons except the auto mode.

If the joystick 8 is used to select the white balance (WB), lower modes including auto, indoor, outdoor, and custom WB are displayed. Auto mode is automatically used to control the WB. Indoor mode is used to control the WB according to an indoor environment. Outdoor mode is used to control the WB according to an outdoor environment. The custom WB mode is used to control the WB according to a photographing mode. The displayed modes are indicated as icons except the auto mode.

If the joystick 8 is used to select the digital effect, a creative image can be photographed. The digital effect includes art, mosaic, sepia, negative, mirror, BLK and WHT, emboss 1, emboss 2, pastel 1 and pastel 2 modes. The art mode gives a rough effect to an image. The mosaic mode gives a mosaic effect to the image. The sepia mode gives a brown tone to the image. The negative mode gives an inverted color to the image. The mirror mode gives a mirror effect to half of the image. The BLK and WHT mode makes the image black and white. The emboss 1 mode gives the image a 3-D effect (embossing). The emboss 2 mode gives a 3-D effect (embossing) around the image. The pastel 1 mode gives a pastel effect to the image. The pastel 2 mode gives a pastel effect around the image.

If the joystick 8 is used to select the 16:9 mode, an image reproduced in a 16:9 wide television can be photographed.

If the joystick 8 is used to select DIS, hand tremor is prevented in order to obtain a stabilized image so that the image can be photographed using zoom, a small subject, while walking, and through a window of a vehicle. If the DIS is set to be on, a DIS icon is displayed.

If the joystick 8 is used to select digital zoom, a user can use zoom and select a desired zoom value (Off, 100x, 200x,400x, or 1200x).

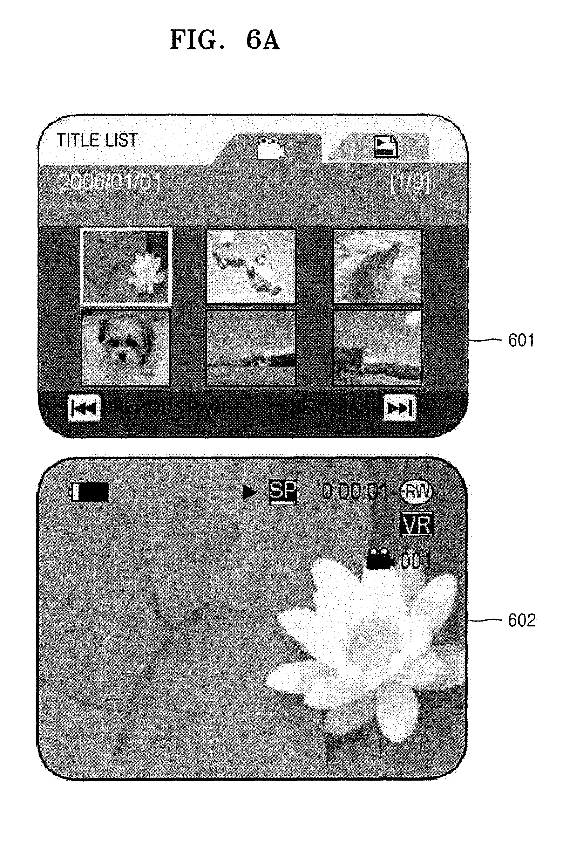

FIGs. 6A through 6C are screen-shots illustrating a user interface screen with respect to a title list of the apparatus for recording and/or reproducing multimedia data according to an exemplary embodiment of the present invention. Referring to FIG. 6A, if a disc is inserted into the apparatus for recording and/or reproducing multimedia data, an LCD window is opened, the mode switch 13 is set as disc, and the power switch 35 is set as player mode, the apparatus for recording and/or reproducing multimedia data provides a thumbnail index of a title list. If a joystick 8 is used to select a scene of a title list that a user wishes to be reproduced, and in order to control reproduction of the title using the play/pause button 23-3, the selected title is reproduced as depicted by screen 602. The stop button 23-2 is used to stop reproducing the title. The volume button 22 is used to adjust volume of the title being reproduced.

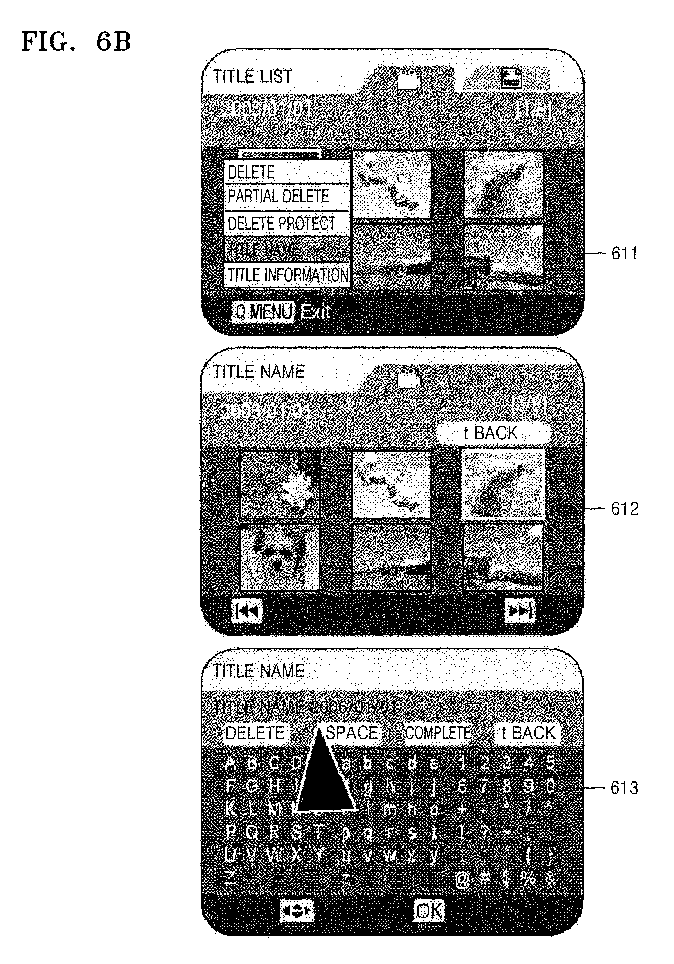

The function of a title list in the player mode will now be described. First, the function of a PB zoom will be described. Referring to FIG. 6B, the zoom lever 37 is moved to T (Tele) in order to enlarge a portion of an image during the reproduction of the title. The joystick 8 is used to move a screen up and down. The zoom lever is moved to W (Wide) to cancel a zoom function. If the Q-MENU button 7 is pressed on a title list screen, a menu appears as depicted by screen 611. The menu includes <delete>, <partial delete>, <delete protect>, <title name> and <title information>.

The function of a title rename will now be described. If the joystick 8 is used to select the <title name> on the screen 611, a title name screen is provided as depicted by screen 612. If the joystick 8 is used to select a scene of the title that is to be renamed, a screen used to rename the tile is provided as depicted by screen 613. If the joystick 8 is used to press the <delete> by setting a cursor on a first character of a current title name, the current title name is deleted. The joystick 8 is used to select a desired character or item. The <delete> is used to delete a character where the cursor is set. <Space> is used to move the cursor with a blank move right once. <Complete> is used to completely input characters. <Backward> is used to move the title list to a previous mode.

Meanwhile, if the joystick 8 is used to select the <title information> on screen 611 illustrated in FIG. 6B, title information is displayed. The title information includes <title name>, <recording date>, <length> indicating a period of recording time, <recording mode> indicating a recording quality such as SP and <disc format> information such as VR.

The joystick 8 is used to select the <delete protect> on screen 601 illustrated in FIG. 6A in order to set a delete protect mode. The delete protect mode includes a <select> mode in which a respective file is set as delete protect, and a <select all> mode in which all files are set as delete protect. If the joystick 8 is used to select the <delete protect> and an execution icon (for example, Execute) provided on a screen, the delete protect is set in an image and a delete protect icon is added to the image.

The joystick 8 is used to select the <delete> on screen 611 illustrated in FIG. 6B in order to delete a selected file. A <delete> mode includes a <select> mode in which the selected file is deleted and a <select all> mode in which all files are deleted. In the delete mode, an icon indicating that the selected file is set as a delete file is added to the selected file. If the joystick 8 is used to select the execution icon (for example, Execute) provided on the screen, a <delete?> message for selecting <yes> or <no> is provided on a user interface screen. If the <yes> mode is selected, the selected file is deleted.

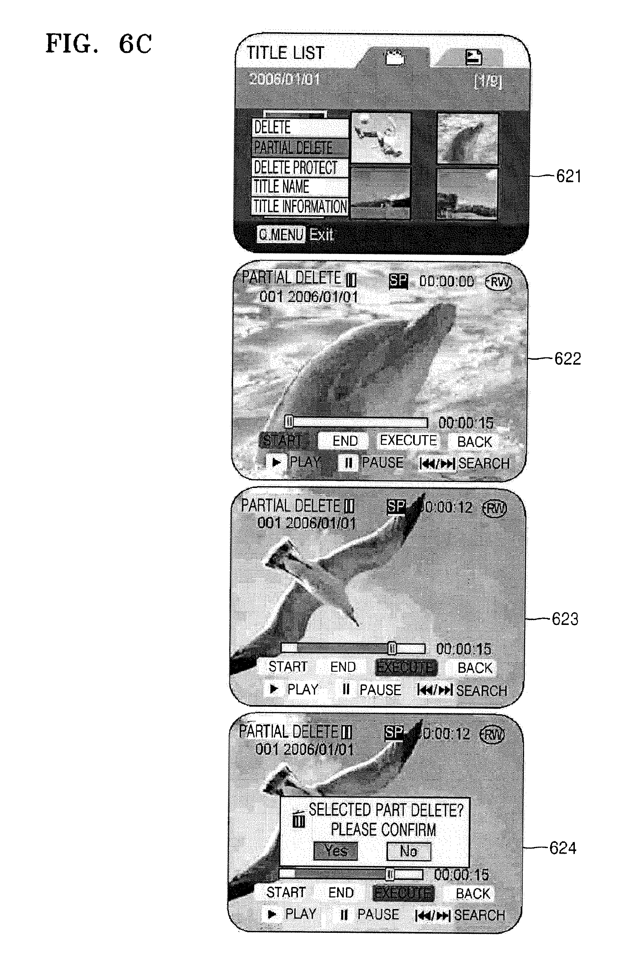

Referring to FIG. 6C, the joystick 8 is used to select the <partial delete> on a screen 621 in order to partially delete a selected title scene. The partial delete is selected like the screen 622 and a title scene that is to be partially deleted is selected. A <start> icon is highlighted so as to provide a still screen. The search buttons 23-1, 23-3 and 23-4 illustrated in FIG. 1 B are used to search a delete start point. The play/pause button 23-3 is pressed on the delete start point and the joystick 8 is pressed in order to highlight an <end> icon. The search buttons 23-1, 23-3 and 23-4 are used to search for a delete end point, the play/pause button 23-3 is pressed, and the joystick 8 is pressed in order to highlight an <execute> icon as depicted by screen 623. If the joystick 8 is pressed, a <delete selected part? please confirm> message for selecting a <yes> icon or a <no> icon is provided on the user interface screen like a screen 624. If the <yes> mode is selected using the joystick 8, the selected part of the title is deleted.

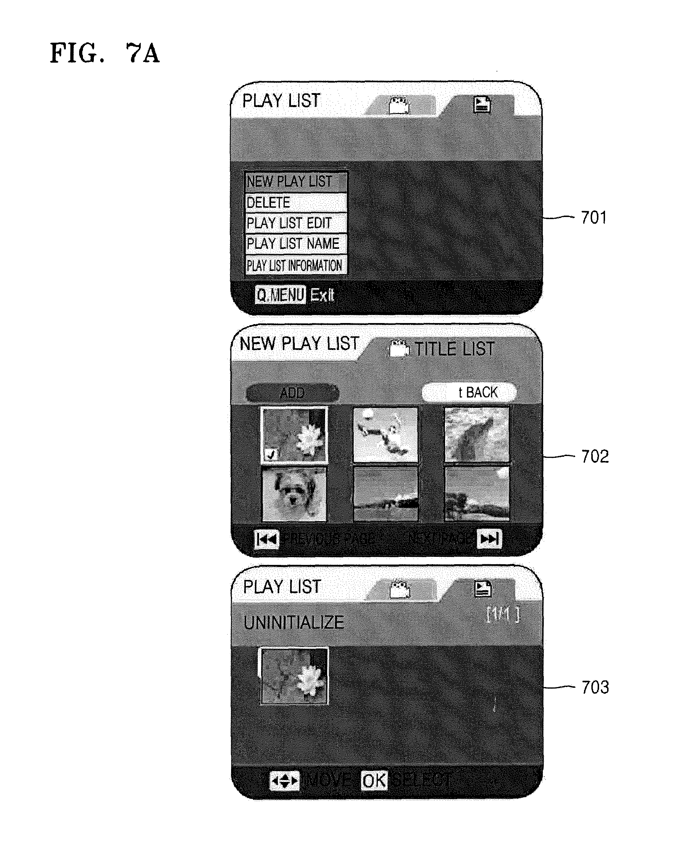

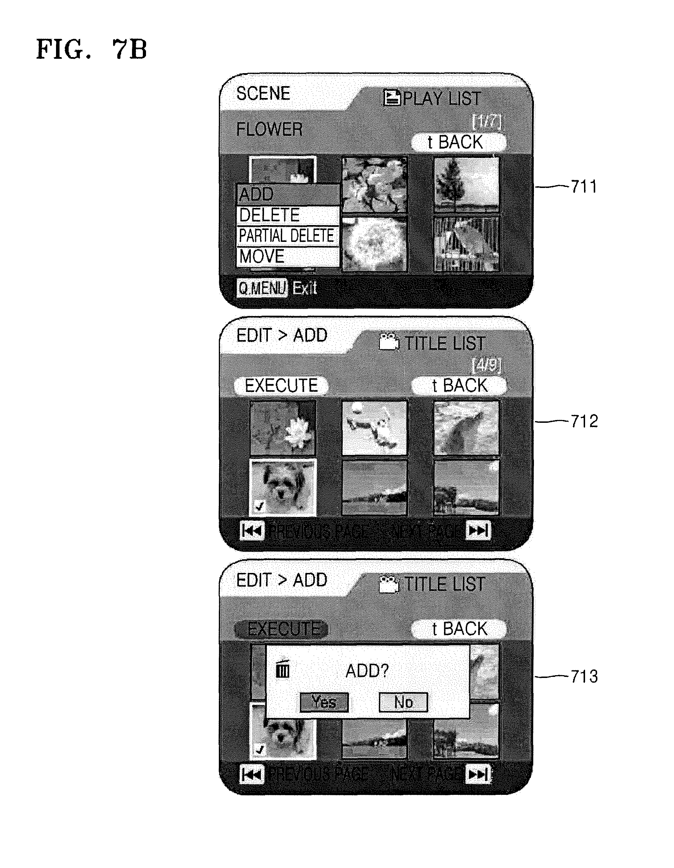

FIGs. 7A and 7B are screen-shots illustrating a user interface screen with respect to a play list of the apparatus for recording and/or reproducing multimedia data according to an exemplary embodiment of the present invention. The user interface with respect to the play list is provided in a player mode.

Referring to FIG. 7A, if the mode switch 13 is set to disc, and the power switch 35 is set to the player mode, a title list screen is displayed, and the joystick 8 is used to highlight a play list icon. A play list scene can be provided in the form of a thumbnail index. At this time, if the Q-MENU button 7 illustrated in FIG. 1A is pressed, a menu screen including <new play list>, <delete>, <edit play list>, <play list name> and <play list information> appears.

If the <new play list> is selected on a menu screen 701 using the joystick 8, a title list screen appears as depicted by screen 702. If an additional image is selected using the joystick 8, a selected screen is indicated on screen 702. If an <add> icon is selected, a new play list is made as depicted by screen 703.

If the <play list name> is selected using the joystick 8, the name of the play list can be changed using a play list rename function. If a play list that is to be reproduced using the joystick 8 is selected on the screen providing the play list scene in the form of a thumbnail index, and the play/pause button 23-3 is pressed, the selected play list is reproduced. The volume button 22 can adjust a volume of the play list being reproduced.

If the <play list information> is selected on the menu screen 701 using the joystick 8, information on the selected play list is displayed. The information on the selected play list includes <play list name>, <recording date>, <length> indicating a recording time, <recording mode> indicating recording quality like SP, and <disc format> like a VR mode. If the <delete> is selected on the menu screen 701, the selected play list can be deleted in the same manner as the <delete> function performed on a title list.

Referring to FIG. 7B, if the <edit play list> is selected on the menu screen 701, a play list edit mode screen 711 appears. The play list edit mode screen 711 includes a menu including <add>, <delete>, <partial delete> and <move>.

If the <add> is selected using the joystick 8, a play list scene that is to be added to a play list is provided. If the play list scene that is to be added to the play list is selected, the selected play list scene is indicated like a screen 712. If the <execute> icon is selected using the joystick 8, a screen 713 is provided. If <yes> is selected, a selected screen is added to the play list. If <move> is selected using the joystick 8, a play list that is to be moved in a similar manner to an <add> process is selected, and the selected play list can be moved to a desired location. Likewise, if <delete> is selected from the <edit play list> menu using the joystick 8, and a play list that is to be deleted is selected, the selected play list can be deleted. If <partial delete> is selected from the <edit play list> menu, a desired portion of the selected play list can be deleted in the same manner as a partial delete process performed on the title list illustrated in FIG. 6C.

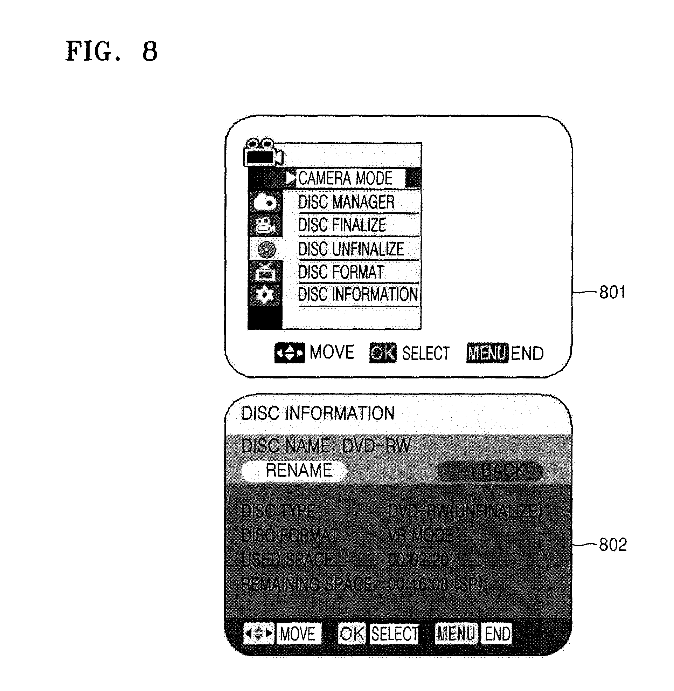

FIG. 8 is a screen-shot illustrating a user interface screen with respect to a disc manager of the apparatus for recording and/or reproducing multimedia data according to an exemplary embodiment of the present invention. Referring to FIG. 8, the mode switch 12 is switched to disc. The power switch 35 is switched to a camera mode or a player mode. If the menu button 11 is pressed, the user interface screen with respect to the disc manager according to an exemplary embodiment of the present invention appears as depicted by screen 801.

The screen 801 provides a menu including <disc finalize>, <disc unfinalize>, <disk format> and <disc info>. A <disc manager> is selected by moving the joystick 8 up and down, and the joystick 8 is pressed. If <disc information> is selected by moving the joystick 8 up and down, and the joystick 8 is pressed, a screen 802 providing <disc name>, <disc type>, <disc format>, <used spaced> and <remaining space> is displayed. The joystick 8 is pressed to exit the disc information menu.

If <rename> is selected from the menu 802 by moving the joystick 8 up or down and then pressing the joystick 8, a disc name can be deleted or renamed.

The <disc format> operated in the camera mode will now be described. DVD-RW/+RW discs can be formatted as described below. The <disc format> menu is selected from a disc manager menu screen like screen 801 by moving the joystick 9 up and down, and then pressing the joystick 8. If the DVD-RW disc is inserted, a message <disc format?(video or VR) all files are deleted> appears on a screen in which <yes> or <no> can be selected. If the DVD+RW disc is inserted, a message <disc format? all files are deleted> is indicated. If the <yes> is selected using the joystick 8, and the joystick 8 is pressed, the disc is completely formatted, and a message <complete> appears.

The <disc finalize> menu which operates in the camera mode and in which an inserted disc operates as DVD-RW/-R/+RDL will now be described. If the <disc finalize> menu is selected from the disc manager menu screen, as depicted by screen 801, by moving the joystick 8 up and down, and then pressing the joystick 8, a message <disc is finalizing please wait for a moment> appears. If the disc is completely finalized, a message <completed!> appears.

If the disc is finalized once, a title list or a play list of the disc cannot be deleted or edited. The time taken to finalize the disc is subject to the type of disc. If a DVD-R.+R DL disc is finalized, the finalized disc cannot be recorded in the apparatus for recording/reproducing multimedia data of an exemplary embodiment of the present invention.

The finalized disc can be reproduced using a PC or a DVD recording/reproducing apparatus. The DVD-R/-RW(video mode)/+R DL can be reproduced using the most DVD recording/reproducing apparatus. The DVD-RW (VR mode) can be reproduced using a DVD recorder supporting the reproduction of the DVD-RW(VR mode).

The <disc unfinalize> menu whichoperates in the camera mode and in which an inserted disc operates as DVD-RW will now be described. The <disc unfinalize> menu is selected from the screen 801 by moving the joystick 8 up and down, and then pressing the joystick 8. When the <disc unfinalize> is executed, a message <disc is unfinalizing please wait for a moment> appears. If the disc is completely unfinalized, a message <completed!> appears.

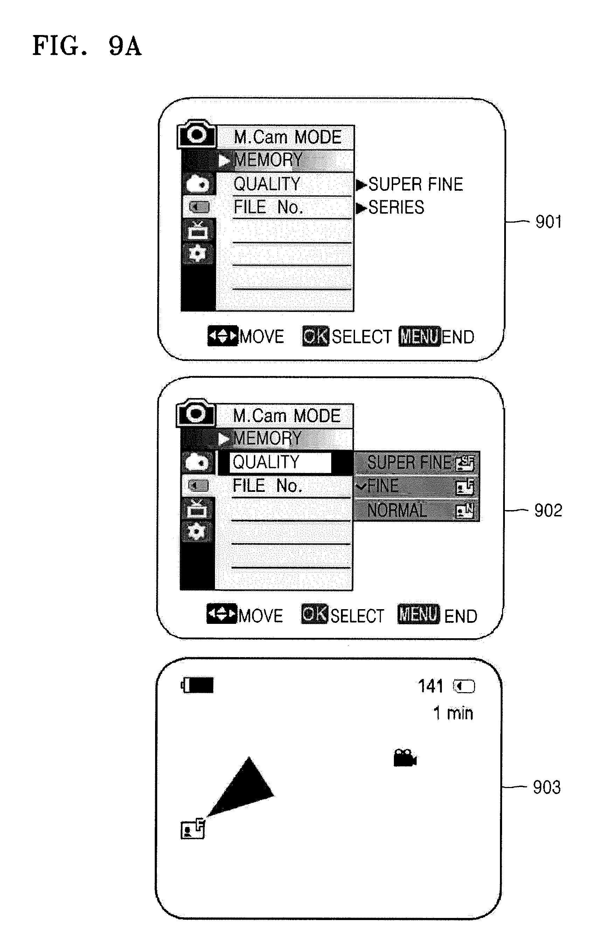

FIGs. 9A through 9C are screen-shots illustrating a user interface screen provided so as to photograph and reproduce a still image in the apparatus for recording and/or reproducing multimedia data according to an exemplary embodiment of the present invention. The still image can be photographed using the apparatus for recording and/or reproducing multimedia data according to an exemplary embodiment of the present invention. A memory card is inserted into the apparatus for recording and/or reproducing multimedia data, the mode switch 13 is switched to <memory card>, and the power switch 35 is set to a camera mode. If the photo button 31 is pressed to photograph the still image, the photographed image is stored in the memory card.

Referring to FIG. 9A, a <photo quality> menu operated in player mode and memory card mode will now be described. The mode switch 13 is set to disc or memory camera mode. When the mode switch 13 is set to disc mode, the power switch 35 is switched to player mode. When the mode switch 13 is set to memory camera mode, the power switch 35 is switched to camera mode.

If the menu button 11 is pressed, <memory> is selected using the joystick 8, and the joystick 8 is pressed, a user interface screen 901 is provided. The <photo quality> is selected by moving the joystick 8 and then pressing the joystick, a selection menu screen 901 including <super fine>, <fine> and <normal> is provided in order to select photo quality using the joystick 8. If the menu button 11 is pressed, an icon of a selected option is displayed on screen 903.

A <file number> setting menu operated in memory card mode will now be described. The mode switch 13 is switched to memory camera mode, the power switch 35 is set to camera, and the menu button 11 is pressed. In the user interface screen 901, <memory> is selected using the joystick 8 and <file number> is selected. The file number can be set to <series> mode or <reset> mode. When a file exists, new images are sequentially named in the <series> mode. When no file exists in the memory card, files are numbered from 0001 in the <reset mode>.

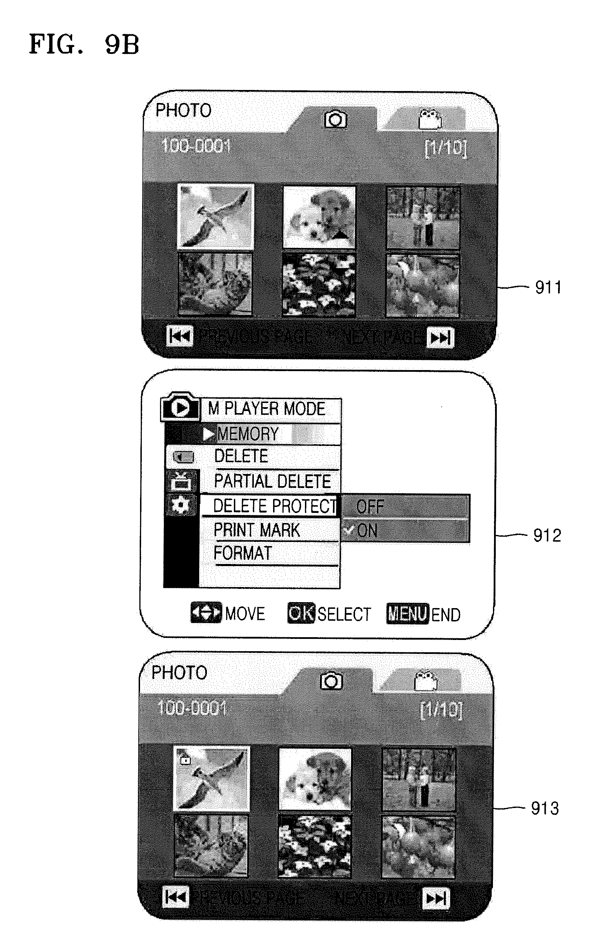

Referring to FIG. 9B, when a user views a photo image, the mode switch 13 is set to memory camera mode and the power switch 35 is set to player mode. A thumbnail index of the photo image is provided on screen 911. When no image is recorded in the memory card, a message <no file> is indicated. Six images before and after the thumbnail index can be searched by moving the joystick 8. If the joystick 8 is pressed with regard to a selected thumbnail index, the selected photo is fully displayed on the screen. In this case, other photo images can be searched by moving the joystick 8.

In the still image camera mode, a menu screen 912 including <delete>, <delete all>, <delete protect>, <print mark> and <format> is provided. A <delete protect> function operated in the memory player mode will now be described. If a delete protect image is selected from the screen 911 using the joystick8, and the menu button 11 is pressed, a menu is displayed. If <memory> is selected using the joystick 8, and the joystick 8 is pressed, the protect function can be set to <on> or <off> in the screen 912. If <on> is selected using the joystick 8, a copy protect icon is displayed on the selected delete protect image on a screen 913.

A <delete> function operated in the memory player mode will now be described. An image that is to be deleted is selected from the screen 911, and the menu button 11 is pressed. If <delete> is selected using the joystick 8, a message <delete?> and a user interface for selecting <yes> or <no> are provided on a screen. If the user selects <yes>, the selected image that is to be deleted is deleted. If the user selects <delete all> from the screen 912 using the joystick 8, a message <all delete?> and a use interface for selecting <yes> or <no> are provided on a screen. If <yes> is selected using the joystick 8, all stored images are deleted.

A <format> function operated in the memory player mode will now be described. If <format> is selected from the screen 912 using the joystick 8, a message <format? all files are deleted> and a user interface for selecting <yes> or <no> are provided on a screen. If <yes> is selected using the joystick 8, all photos/videos stored in the memory are deleted. If the format is completed, a message <complete!> is displayed.

A <print mark> function operated in the memory player mode will now be described. In the print mark function, a memory stick in which a print mark is set is inserted into a printer. If <print mark> is selected from the screen 912 using the joystick 8, a menu including <all off>, <all files> and <current file> is displayed on the left of a <print mark> menu. <all files> indicates that all stored images are printed per sheet. <current file> indicates that the print mark is set to a current image. If the print mark is set to the current image, a print mark icon and printing number are displayed on the current image, to which the print mark is set, on the photo image thumbnail index screen illustrated in FIG. 9B. <all off> is pressed in order to release the print mark setting.

The apparatus for recording/reproducing multimedia data of an exemplary embodiment of the present invention can MPEG-record video in the memory card. If the mode switch 13 is set to memory camera mode, the power switch 35 is set to camera, and the start/stop button 36 are pressed, the video is recorded in memory camera mode according to the MPEG standards. If the start/stop button 36 is again pressed, the apparatus for recording/reproducing multimedia data stops recording the video.

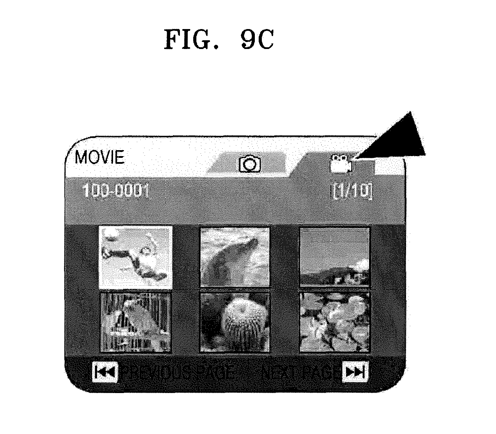

Referring to FIG. 9C, the reproduction of the video recorded in the memory card will now be described. If a video icon on the right of a camera icon is selected from the screen 911 using the joystick 8, a thumbnail index of a stored video file is provided. If a video that is to be reproduced is selected using the joystick 8, the video can be reproduced.

While the user reproduces the video from the thumbnail index screen using the joystick 8, if the joystick 8 or the start/stop button 36 is pressed, a selected screen is displayed. In this case, if the photo button 31 is pressed, a photo image is recorded in the memory card.

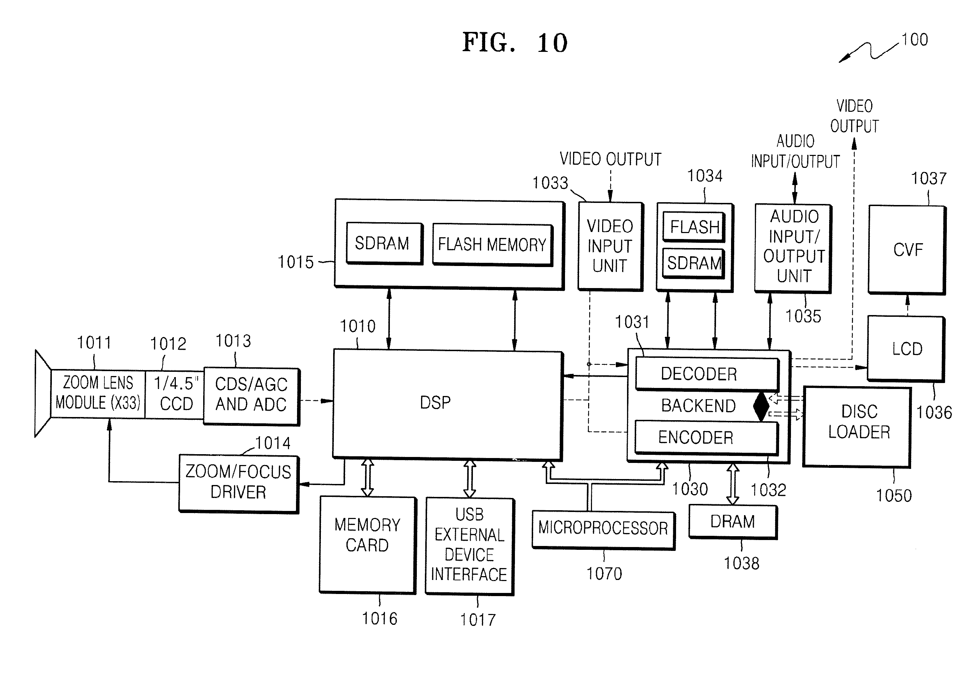

FIG. 10 is a block diagram illustrating an apparatus 100 for recording/reproducing multimedia data according to an exemplary embodiment of the present invention.

Referring to FIG. 10, the apparatus for recording/reproducing multimedia data 100 includes data processors 1010 through 1017, encoders and decoders 1030 through 1038 that encode and decode an image and audio data, a disc loader 1050, and a microprocessor 1070 that controls a system.

The data processors 1010 through 1017 convert image information into digital signals, process the digitized image information into data that is to be recorded in a semiconductor recording medium, and control the processed data to be output to an external device. The data processors 1010 through 1017 includes a digital signal processor (DSP) 1010, a zoom lens module 1011, a charge-coupled device (CCD) module 1012, a correlated double sampling (CDS)/ automatic gain control (AGC) & analog-to-digital converter (ADC) 1013, a zoom/focus driver 1014, a first storage unit 1015, a memory card 1016 and an external device interface 1017.

The DSP 1010 performs serial data communication with the microprocessor 1070. The DSP 1010 controls registers of the CDS/AGS & ADC 1013 in camera mode and YC converts an image. The DSP 1010 performs WB, programmed A/E and AF functions, and controls the zoom/focus driver 1014 for performing digital zoom. The DSP 1010 outputs a signal having a predetermined format, i.e., ITU-R 656 format to a backend chip 1030.

The DSP 1010 stores data in the memory card 1016 such as an SMC, MMC, or an MS. The DSP 1010 controls the external device interface 1017 to be connected with an external device such as a computer, a DVD, a digital camera, a memory stick/multi card, and a monitor through an interface such as a USB 2.0 protocol.

The encoders and decoders 1030 through 1038, which encode and decode an image and audio data, include the backend chip 1030 comprising a decoder 1031 and an encoder 1032, a video input unit 1033, a second storage unit 1034, an audio input/output unit 1035, LCD 1036, compressed volume file (CVF) 1037 and DRAM 1038. The audio input/output unit 1035 and the LCD 1036 can be classified as an input unit.

When data is recorded, the encoder 1032 of the backend chip 1030 receives the digitized image information input from the DSP 1010 or ITU-R 656 format video data from the video input unit 1033, MPEG2-compresses the received data, and transmits the MEPG2-compressed data to the disc loader 1050 by using advanced technology attachment packet interface (ATAPI) communication.

When a disc is reproduced, the decoder 1033 receives the MPEG2 data from the disc inserted into the disc loader 1050, and outputs ITU-R 656 format video data to the DSP 1010 or the LDC 1036 including an LCD driver. The ITU-R 656 format video data can be externally output through a multi jack (not shown).

The backend chip 1030 including the decoder 1031 and the encoder 1032 transmits audio clock and data to the audio input/output unit 1035 and controls an audio signal using serial data. The decoder 1031 and the encoder 1032 can record, reproduce, and edit a VR disc in a VR mode of a DVD-RW disc. The disc loader 1050 is ATAPI interfaced and can be implemented regardless of the type of disc loader which can record and reproduce the VR disc.

The backend chip 1030 can perform scan/search/zoom/skip/pause functions during the reproduction of the multimedia data and edit recorded VR data. The backend chip 1030 controls input audio and video signals that are to be recorded in a DVD-R/RW disc, decodes data recorded in the disc, and reproduces the decoded data. The decoder 1031 and the encoder 1032 can finalize contents recorded in the DVD-R/RW disc so as to be compatible with other reproduction devices.

The microprocessor 1070 controls each block and circuit of the apparatus for recording/reproducing multimedia data 1000. In detail, the microprocessor 1070 can communicate data with each block, control the disc loader 150, and control a battery, the LCD 1036, the CVF 1037 and LED.

The apparatus for recording/reproducing multimedia data 1000 records the image and audio data as described below. The DSP 1010 processes the image data received from a data processor, the encoder 1032 encodes the processed image data, and stores the encoded image data in the memory card 1016 or a disc inserted into the disc loader 1050. The CCD module 1012 electrically converts an optical signal of an image input through the zoom lens 1011. The CDS/AGC and ADC 1013 samples the electrical signal, adjusts gains, and digitally converts the signal.

The signal digitally converted in the DSP 1010 is processed as MPEG4, or JPEG image data. The audio input/output unit 1035 receives the audio data, the encoder 1032 encodes the audio data, and the encoded audio data is recorded in the memory card 1016 or the disc according to a memory card mode or a camera mode. Image data processed in the memory card mode is stored in the memory card 1016. Converted data is MPEG2-compressed, and is recorded in an 8 cm disc inserted into the disc loader 1050 in the camera mode.

The apparatus for recording/reproducing multimedia data 1000 reproduces the image and audio data as described below. The disc loader 1050 into which a disc is inserted in the camera player mode reads the multimedia data, the decoder 1031 decodes the multimedia data, and outputs the decoded multimedia data. The memory card 1016 reads the multimedia data in the memory player mode, the decoder 1031 decodes the multimedia data, and outputs the decoded multimedia data.

Although not shown in FIG. 10, the apparatus 100 for recording/reproducing multimedia data further includes recording device selection means that selects a semiconductor recording device, i.e., the memory card 1016 or an optical recording device, i.e., the disc loader 1070; and a user interface unit including photographing/reproduction selection means that selects a photographing mode or a reproduction mode. The recording device selection means can be realized as the mode switch 13 illustrated in FIG. 1 B. The photographing/reproduction selection means can be realized as a means for locating the indicator 35-1 illustrated in FIG. 1C in the camera mode indicator 35-2 or the player mode indicator 35-3. The output unit including the LCD 1036 displays a photographing image, reproduction image, and menu information.

When the recording device selection means is realized as the semiconductor recording device, a still image is photographed or reproduced in a photographing mode or in a player mode. When the recording device selection means is realized as the optical recording device, video is recorded or reproduced in the photographing mode or in the player mode.

When the apparatus100 for recording/reproducing multimedia data does not include the semiconductor recording device, if a control command used for the photographing mode or the player mode is input, information indicating that there is no memory card is displayed. The apparatus 100 for recording/reproducing multimedia data further comprises the Q-MENU button 7 for providing a quick menu based on the selection of the semiconductor recording device or the optical recording device, and based on the selection of the photographing mode or the player mode.

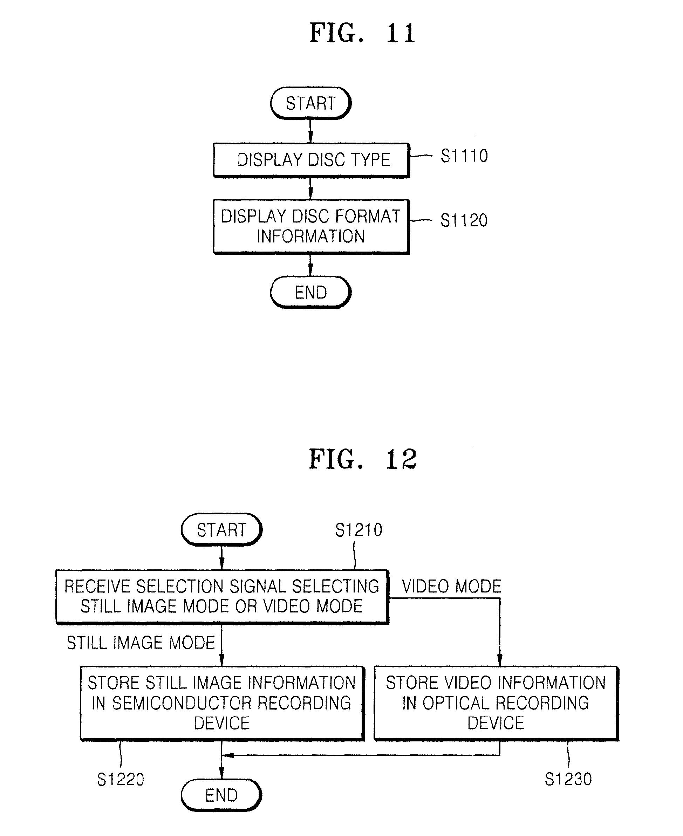

FIG. 11 is a flowchart illustrating an OSD menu displaying method of a multimedia data recording and/or reproducing device in an optical recording device according to an exemplary embodiment of the present invention.

Referring to FIG. 11, a disc type information icon indicating disc type information of the optical recording device is displayed in step 1110. A disc format information icon indicating disc format information of the optical recording device is displayed in step 1120. The disc type information icon indicates DVD-R, DVD+R, or DVD-RW. The disc format information icon indicates a video mode or a VR mode.

FIG. 12 is a flowchart illustrating an image information storing method of a multimedia data recording and/or reproducing device in a semiconductor recording device and an optical recording device according to an exemplary embodiment of the preset invention.

Referring to FIG. 12, a selection signal for selecting a still image mode in which a still image is recorded or a video mode in which video is recorded is received from a user interface in step S1210. When the still image mode is selected, still image information is stored in the semiconductor recording device in step 1220. When a video mode is selected, video information is stored in the optical recording device in step 1230.

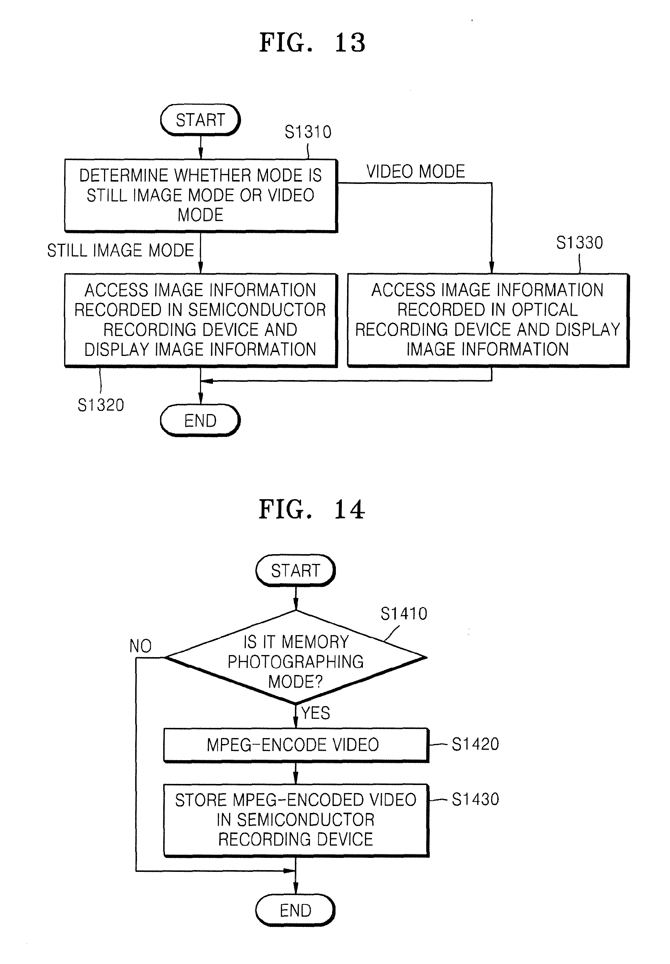

FIG. 13 is a flowchart illustrating an image information reproducing method of a multimedia data recording and/or reproducing device including a semiconductor recording device and an optical recording device according to an exemplary embodiment of the present invention.

Referring to FIG. 13, it is determined whether a mode is a still image mode, in which a still image is reproduced, or a video mode, in which video is reproduced in step 1310. If the mode is determined to be the still image mode, image information recorded in the semiconductor recording device is accessed and the accessed image information is displayed in step 1320.

If the mode is determined to be the video mode, image information recorded in the optical recording device is accessed and the accessed image information is displayed in step 1330. As a result of accessing the image information recorded in the semiconductor recording device or the optical recording device, when no image information is stored in the semiconductor recording device or the optical recording device, the image information reproducing method further includes an operation of displaying a message indicating that there is no image information.

FIG. 14 is a flowchart illustrating a video information storing method of a multimedia data recording and/or reproducing device in a semiconductor recording device and an optical recording device according to an exemplary embodiment of the preset invention.

It is determined if the multimedia data is recorded in the semiconductor recording device in a memory photographing mode in step 1410. If it is determined that the multimedia data is recorded in the semiconductor recording device in the memory photographing mode, video is MPEG-encoded in step S1420. The MPEG-encoded video is stored in the semiconductor recording device in step 1430.

The present invention can also be implemented as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion.

According to the present invention, an apparatus can effectively record and reproduce multimedia data in a semiconductor recording device and an optical recording device.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An apparatus for recording and reproducing multimedia data, the apparatus comprising:
a recording device selection means for selecting at least one of a semiconductor recording device and a optical recording device;
a photographing/reproduction selection means for selecting a photographing mode in which an image is photographed or a player mode in which a recorded image is reproduced; and
a display for displaying at least one of a photographed image, a reproduced image and menu information.

2. The apparatus of claim 1, wherein when the recording device selection means selects the semiconductor recording device, a still image is photographed or reproduced in the photographing mode or the player mode.

3. The apparatus of claim 2, when the recording device selection means selects the optical recoding device, video is recorded or reproduced in the photographing mode or the player mode.

4. The apparatus of one of claims 1 to 3, wherein when the semiconductor recording device is not included in the apparatus, if a control command used for the photographing mode or the player mode is input, information indicating that there is no memory card is displayed.

5. The apparatus of one of claims 1 to 4, further comprises a quick menu selection means for providing a quick menu based on the selection of the semiconductor recording device or the optical recording device and on the selection of the photographing mode or the player mode.

6. An on screen display menu display method performed by an apparatus for recording and reproducing multimedia data in a semiconductor recording device and an optical recording device, the method comprising:
displaying a disc type information icon indicating disc type information of the optical recording device; and
displaying a disc format information icon indicating disc format information of the optical recording device.

7. The method of claim 6, wherein, when the disc type information icon indicates at least one of DVD-R, DVD+R and DVD_RW, and
the disc format information icon indicates a video mode in which a disc is formatted so that the disc can be reproduced in a DVD recording and reproducing device, or a video recording mode in which a disc is formatted so that the disc can be reproduced in a DVD recording device.

8. An image information storing method of an apparatus for recording and reproducing multimedia data, the method comprising:
receiving a selection signal selecting a still image mode in which a still image is recorded or a video mode in which video is recorded,
when the still image mode is selected using the received selection signal, storing the still image information in a semiconductor recording device,
when the video mode is selected using the received selection signal, storing the video information in a optical recording device.

9. An image information reproducing method performed by an apparatus for recording and reproducing multimedia data, the method comprising:
determining whether a mode is a still image mode in which a still image is reproduced or a video mode in which video is reproduced;
if the mode is determined to be the still image mode, accessing image information recorded in a semiconductor recording device and displaying the image information; and
if the mode is determined to be the video mode, accessing image information recorded in a optical recording device and displaying the image information.

10. The method of claim 9, further comprises, as a result of accessing the image information recorded in the semiconductor recording device or the optical recording device, if the image information is not stored in the semiconductor recording device or the optical recording device, displaying a message indicating that there is no image information.

11. A video information storing method of an apparatus for recording and reproducing multimedia data, the method comprising:
determining if a mode is a memory photographing mode in which the multimedia data is recorded in a semiconductor recording device;
if the mode is determined to be the memory photographing mode, MPEG-encoding video; and
storing the MPEG-encoded video in the semiconductor recording device.

12. An apparatus for recording and reproducing multimedia data, the apparatus comprising:
a data processor for converting image information into a digital signal, processing the digitized image information into data that is to be recorded in a semiconductor recording device, and controlling the processed data to be output to an external device;
an encoder for encoding the digitized image information input from the data processor and externally input video as data that is to be recorded in a optical recording device;
a decoder for decoding the data recorded in the optical recording device;
an output unit for outputting the image information decoded by the decoder or the data processed by the data processor; and
a controller for controlling the operation of the data processor, the encoder, the decoder and the output unit.
